# EUROPÄISCHE PATENTANMELDUNG

(11) **EP 0 829 708 A1**
(43) Veröffentlichungstag der Anmeldung: **18.03.1998**
(21) Anmeldenummer: 96114783.2
(22) Anmeldetag: 16.09.1996
(51) Int. Cl.: G01K 17/02

(54) **Mobiles System zum Erfassen eines Heizwärmeverbrauchs von Heizkörpern gemäss dem Prinzip der Verdunstung**

(71) Anmelder: Raab Karcher Energieservice GmbH, 45131 Essen (DE)
(72) Erfinder: Wolff, Manfred, 68526 Ladenburg (DE)
(74) Vertreter: Schmid, Rudolf, Dipl.-Ing., Patentanwalt

(57) **Zusammenfassung**

Die Erfindung betrifft ein mobiles System (5) zum Erfassen eines Heizwärmeverbrauchs von Heizkörpern gemäß dem Prinzip der Verdunstung mit einem Ablesegerät zur Erfassung differierender Pegelstände verdunstender Meßflüssigkeit in mindestens einer Ampulle (3). Die Ampulle (3) ist mit der Meßflüssigkeit (2) mittels einem Gehäuse oder einer Halterung (4) an Heizkörpern (1) befestigt. Ein Temperatursensor (10) ist zur Bestimmung der Temperatur an der Ampulle während des Ablesens vorgesehen und ein an das Gehäuse oder die Halterung (4) der Ampullen (3) adaptierbarer Rahmen des mobilen Ablesegeräts (5). Das mobile Ablesegerät (5) ist zum Ausgleich von in der Ampulle (3) verdunsteter Meßflüssigkeit (2) intern oder teilweise extern mit Dosiermitteln(6) versehen.

## Beschreibung

Die Erfindung betrifft ein mobiles System zur Erfassung des Heizwärmeverbrauchs mit dem Merkmalen des Oberbegriffs des Anspruchs 1 und ein Gehäuse oder Halterung für Ampullen gemäß Anspruch 17.

Die Abrechnung verbrauchsabhängiger Heizkosten ist in Deutschland durch Verordnung vorgeschrieben und auch in anderen europäischen Ländern üblich. Die Erfassung des Wärmeverbrauchs eines Heizkörpers erfolgt vielfach mit sogenannten Heizkostenverteilern nach dem Verdunstungsprinzip (HKV-V).
Die grundlegenden Anforderungen an diese Geräte sind in der DIN EN 835 beschrieben. Das wesentliche Element eines HKV-V ist eine Ampulle, die mit einer schwerverdunstenden Flüssigkeit gefüllt ist, die in Abhängigkeit von einer Heizkörpertemperatur und damit der Heizleistung mehr oder weniger schnell verdunstet. Die verdunstete Flüssigkeitsmenge ist damit ein Maß für die vom Heizkörper abgegebene Wärmemenge.

Die HKV-V werden üblicherweise einmal jährlich abgelesen, d. h. der Füllstand der Ampulle wird visuell überprüft. Nach dem Ablesen wird die durch die Verdunstung teilweise entleerte Ampulle gegen eine volle ausgetauscht. Hierzu wird der HKV-V geöffnet, wozu üblicherweise ein Manipulationsschutz entfernt werden muß, die alte Ampulle wird entnommen und in einen Vorratsbehälter gestellt, eine volle Ampulle wird in den HKV-V gesetzt, dieser wieder verschlossen und mit einem Manipulationsschutz versehen. Teilweise wird die alte Ampulle zur Nutzerkontrolle verschlossen im HKV-V aufbewahrt und erst bei der nächsten Ablesung ein Jahr später dem HKV-V entnommen.

Ein automatisches Ablesegerät für Heizkostenverteiler nach dem Verdunstungsprinzip ist aus der DE 37 41 944 A1 bekannt. Gemäß der Offenbarung der DE 37 41 944 A1 wird die beim Ablesen am Heizkörper herrschende Temperatur als Meßwert berücksichtigt, da diese einen Einfluß auf die Ausdehnung der Meßflüssigkeit und damit auf den erfaßten Meßwert hat. Zu diesem Zweck wird ein Temperaturfühler des Ablesegeräts federnd gegen ein Rückteil des Heizkostenverteilers gedrückt.

Die aus dem Stand der Technik bekannten Verfahrensweisen bedeuten einen großen logistischen Aufwand. Für den jährlichen Ampullenwechsel müssen Glasampullen hergestellt, mit Verdunstungsflüssigkeit gefüllt, mit einem Stopfen verschlossen, gelagert und vor Ort transportiert werden. Nach dem Ampullentausch entsteht ein ähnlich großer Aufwand für die Entsorgung. Weitere Nachteile des bisherigen Verfahrens sind der große Zeitaufwand vor Ort und bei visueller Ablesung große Fehleranfälligkeit.

Aufgabe der Erfindung ist es ein mobiles System zu schaffen, das den logistischen Aufwand zur Erfassung des Heizwärmeverbrauchs wesentlich reduziert, insbesondere soll auf einen Tausch der Ampullen beim Erfassen des Heizwärmeverbrauchs verzichtet werden können.

Diese Aufgabe wird mit einem mobilen System zur Erfassung des Heizwärmeverbrauchs mit den Merkmalen des Hauptanspruchs gelöst. Bevorzugte Weiterbildungen der Erfindung sind in den Unteransprüchen dargestellt.

Das erfindungsgemäße mobile System zum Erfassen eines Heizwärmeverbrauchs von Heizkörpern gemäß dem Prinzip der Verdunstung weist ein Ablesegerät zur Erfassung differierender Pegelstände verdunstender Meßflüssigkeit in mindestens einer Ampulle auf, wobei in sogenannten Verdunstungs-Heizkostenverteilern, HKV-V, die Ampulle mit der Meßflüssigkeit mittels einem Gehäuse oder einer Halterung an Heizkörpern befestigt ist. Ein Temperatursensor ist zur Bestimmung der Temperatur an der Ampulle während des Ablesens vorgesehen, und ein Rahmen des mobilen Ablesegeräts ist an das Gehäuse oder die Halterung der Ampullen adaptierbar. Das mobile Ablesegerät ist zum Ausgleich von in der Ampulle verdunsteter Meßflüssigkeit intern oder zumindest teilweise extern mit Dosiermitteln versehen. Gemäß der Erfindung können mit den in das Ablesegerät integrierten Dosiermitteln die Ampullen der HKV-V befüllt werden, die in Gehäusen oder Halterungen an Heizkörpern befestigt sind, ohne daß es erforderlich wäre, die Ampullen oder Gehäuse oder Halterungen zu bewegen. Der logistische Aufwand für Austausch und Entsorgung der Ampullen und damit die Kosten zur Vorbereitung der Heizkostenverteiler für die Meßwertaufnahme für eine Heizperiode sinkt damit auf ein Minimum. Das mobile System eines Ablesegeräts wird in reproduzierbarer Lage an das Gehäuse oder die Halterung einer Ampulle adaptiert und sieht neben Erfassungs- und Auswerteeinheiten Dosiermittel vor, die zum Nachfüllen von verdunsteter Meßflüssigkeit in die Ampulle geeignet sind. Nach Ablesen erfolgt das Befüllen der Ampullen mit Meßflüssigkeit mit den erfindungsgemäßen Dosiermitteln.

Gemäß einer vorteilhaften Ausgestaltung der Erfindung weist das mobile System zum Erfassen des Heizwärmeverbrauchs eine auf die Ampulle für die Meßflüssigkeit gerichtete Beleuchtungseinrichtung auf, die mit den Dosiermitteln zusammenwirkt.

Gemäß einer weiteren vorteilhaften Ausgestaltung der Erfindung weist das mobile System zum Erfassen des Heizwärmeverbrauchs im Ablesegerät eine feststehende Ableseoptik mit optischem Sensor auf. Fehlerquellen, die durch bewegliche Ablesevorrichtungen entstehen, können mit der erfindungsgemäßen feststehenden Ableseoptik mit optischem Sensor vermieden werden.

Gemäß einer weiteren vorteilhaften Ausgestaltung der Erfindung weist das mobile System zum Erfassen des Heizwärmeverbrauchs eine Ableseoptik mit insbesondere mindestens einer CCD Zeile (charge-coupled-device Zeile) auf. Das mobile System mit Ablesegerät wird nach dem Entfernen von Manipulationssicherungen, wie z. B. Klebeplomben, auf den Heizkostenverteiler aufgesetzt, wobei z. B. die Klebeplomben abgeschert werden, und zunächst der Flüssigkeitsstand automatisch abgelesen. Hierzu wird die vorgenannte Beleuchtungseinrichtung herangezogen, welche über eine bevorzugterweise unter der Ampulle angeordneten Lichtleitoptik die Meßampulle beleuchtet. Die Brechung des Lichts in der Trennfläche zwischen Meßflüssigkeit und Luft zeigt den Flüssigkeitsstand durch ein deutliches Lichtsignal an. Der Ablesebereich der Meßampulle wird über eine geeignete Optik, insbesondere auf eine im Abfüllgerät vorhandene CCD-Zeile (charge-coupled-device Zeile) projiziert, und das Abbild der Oberfläche der Flüssigkeitssäule in der Ampulle in ein eindeutiges Digitalsignal umgewandelt, das z. B. an der CCD-Zeile ausgegeben wird.

Gemäß einer weiteren vorteilhaften Ausgestaltung der Erfindung weist das mobile System zum Erfassen des Heizwärmeverbrauchs eine Steuerungs- und Auswerteelektronik auf, die aus dem eindeutigen Digitalsignal, das dem Abbild der Oberfläche der Flüssigkeitssäule in der Ampulle entspricht, die Füllstandshöhe der Ampulle errechnet und die Dosiermittel steuert.

Gemäß einer weiteren vorteilhaften Ausgestaltung der Erfindung weist das mobile System zum Erfassen des Heizwärmeverbrauchs am oder im Ablesegerät eine Kommunikationsschnittstelle auf, über die Verbrauchswerte angegeben werden können aus einem externen oder internen Speicher des Ablesegeräts für mehrere Heizperioden betreffenden Meßwerte. Auf die Weise kann einem Verbraucher vor Ort vom im allgemeinen für heizungstechnische Fragen kompetenten Bediener des erfindungsgemäßen mobilen Systems angegeben werden, ob sich im Lauf der angegbenen Perioden dessen Verbrauch nennenswert geändert hat und es können vor Ort aus diesen Meßwerten Vorschläge, Beratung oder Verbesserungen abgeleitet werden.

Gemäß einer weiteren vorteilhaften Ausgestaltung der Erfindung zum Erfassen des Heizwärmeverbrauchs weisen die Dosiermittel ein an die Ampulle für die Meßflüssigkeit anschließbares Füllorgan mit zugeordneten Leitungen und Ventilen auf nebst extern angeordnetem Vorratsbehälter für nachzufüllende Meßflüssigkeit sowie einer externen Fördereinrichtung. Vorzugsweise sind Vorratsbehälter und Fördereinrichtung extern angeordnet, so daß das Ablese- und Abfüllgerät nicht so schwer wird.

Gemäß einer weiteren vorteilhaften Ausgestaltung der Erfindung zum Erfassen des Heizwärmeverbrauchs ist das Füllorgan als bewegliche Füllkanüle mit Endstücken aus Metall ausgebildet, so daß das erfindungsgemäße mobile System flexibel einsetzbar ist. Im Gehäuse des HKV, das bevorzugterweise aus Kunststoff beschaffen ist, ist oberhalb der Ampullenmündung eine Öffnung vorgesehen, durch die die Füllkanüle in die Ampulle abgesenkt wird. Die Zuführung der Kanüle kann z.B. mit Hilfe einer geeigneten Mechanik bewerkstelligt werden, die durch einen kleinen Elektromotor angetrieben wird.

Gemäß einer weiteren vorteilhaften Ausgestaltung der Erfindung zum Erfassen des Heizwärmeverbrauchs wird das Füllorgan der Dosiermittel über eine motorisch angetriebene Absenkmechanik der Ampulle für die Meßflüssigkeit zugeführt.

Gemäß einer weiteren vorteilhaften Ausgestaltung der Erfindung zum Erfassen des Heizwärmeverbrauchs erfolgt der Antrieb der Absenkmechanik elektromagnetisch, pneumatisch oder durch Federkraft.

Gemäß einer weiteren vorteilhaften Ausgestaltung der Erfindung zum Erfassen des Heizwärmeverbrauchs wird die Meßflüssigkeit mittels einer Fördereinrichtung, wie z. B. einer motorisch betriebenen Kolben- oder Kreiselpumpe über eine Schlauchleitung und ein Steuer- und Rückschlagventil der Ampulle zugeführt.

Gemäß einer weiteren vorteilhaften Ausgestaltung der Erfindung zum Erfassen des Heizwärmeverbrauchs wird die Meßflüssigkeit durch Überdruck im Meßflüssigkeits-Vorratsbehälter gefördert, der z. B. durch ein Treibgas oder mit Hilfe einer Luftpumpe erzeugt werden kann.

Gemäß einer weiteren vorteilhaften Ausgestaltung der Erfindung zum Erfassen des Heizwärmeverbrauchs weisen die Dosiermittel eine Grobdosierungseinheit auf, welche über eine Zeitsteuerung oder eine Weglängenregelung die Meßflüssigkeit vordosieren.

Gemäß einer weiteren vorteilhaften Ausgestaltung der Erfindung zum Erfassen des Heizwärmeverbrauchs ist im Ablesegerät eine Einstellvorrichtung für eine Vorjahresanzeige angeordnet, so daß die Bereitstellung eines Nachweises für den angegebenen Meßwert der letzten Abrechnungsperiode erbracht werden kann.

Gemäß einer weiteren vorteilhaften Ausgestaltung der Erfindung zum Erfassen des Heizwärmeverbrauchs wird der Temperatursensor elektromagnetisch an Gehäuse oder Halterung der Ampulle zur Anlage gebracht.

Gemäß einer weiteren vorteilhaften Ausgestaltung der Erfindung zum Erfassen des Heizwärmeverbrauchs wird der Sensor pneumatisch oder durch Federkraft zur Anlage gebracht.

Vorzugsweise kann der Temperatursensor gemäß der Erfindung die Temperatur an der Ampulle auch berührungslos erfassen, z. B. mittels Strahlungsmessung oder der Erfassung von Parametern der Meßflüssigkeit, wie Dichte, Wichte oder Brechungsindizes.

Die Auswerteelektronik kann die Ausdehnung der Flüssigkeit bei Betriebstemperatur der Heizung gegenüber einer Bezugstemperatur rechnerisch kompensieren und aus der auf Bezugstemperatur korrigierten Füllhöhe einen der benutzten Skala entsprechenden temperaturkompensierten Anzeigewert und daraus die notwendige Nachfüllmenge berechnen. Da die Temperatur der nachzufüllenden Flüssigkeit im Vorratsbehälter eventuell ebenfalls von der für die Kalibrierung der Anzeigenskala zugrunde gelegten üblichen Bezugstemperatur von beispielsweise 20° C abweicht (z.B. bei Ablesung im Hochsommer oder durch Erwärmung im Ablesegerät), kann zweckmäßigerweise auch die Temperatur im Vorratsbehälter durch einen zweiten Sensor bestimmt und die thermische Ausdehnung der Nachfüllmenge in gleicher Weise wie oben beschrieben berücksichtigt werden.

Gemäß einer weiteren vorteilhaften Ausgestaltung der Erfindung zum Erfassen des Heizwärmeverbrauchs wird die
Sollfüllstandshöhe in der Ampulle mittels der Ableseeinrichtung geregelt. Die Nachfüllmenge wird mit Hilfe einer Fördereinrichtung, z.B. der kleinen Kolbenpumpe über die Schlauchleitung und das Steuer- oder Rückschlagventil in die Meßampulle gedrückt. Die Pumpe, vorzugsweise eine hochgenaue Dosierpumpe wird z.B. mit einem kleinen Elektromotor betrieben, wobei die genaue Menge über Zeitsteuerung oder Weglängenregelung grob voreingestellt werden kann. Die exakte Füllstandshöhe wird anschließend mit Hilfe der Ableseeinrichtung geregelt. Die Regelung der Fördereinrichtung kann alternativ auch von Anfang an mittels der Auswerteeinheit erfolgen. Nach diesem Vorgang ist die Meßampulle wieder vollständig gefüllt, einschließlich eines Zuschlages zur Kompensation der Kaltverdunstung und gegebenenfalls thermischen Ausdehnung wie zuvor beschrieben.

Gemäß einer weiteren vorteilhaften Ausgestaltung der Erfindung zum Erfassen des Heizwärmeverbrauchs weist das Ablesegerät zur vermeidung von Doppelpassungen einen gegenüber dem Gehäuse- oder dem Halter für die Ampulle positionierbaren Freiraum zwischen einem Verbindungselement des Ablesegeräts und dem Gehäuse oder dem Halter auf. Anlageflächen an Schenkeln des Ablesegeräts sind konkav geformt, um beim Aufschieben auf das Gehäuse oder Halter Klemmen und Verkanten zu vermeiden. Eine der Anlageflächen kann aber auch alternativ von einem Druckmittel gegen Gehäuse oder Träger gedrückt werden oder einer der Schenkel kann mit einem Scharnier gelenkig am Verbindungselement des Ablesegeräts angeordnet sein, und durch Verschwenken fest an Gehäuse oder Träger angelegt werden.

Gemäß der Erfindung zum Erfassen des Heizwärmeverbrauchs weist ein Gehäuse oder eine Halterung Ampullen auf mit verdunstender Meßflüssigkeit zum Erfassen des Heizwärmeverbrauchs, wobei die Ampullen gemäß einer weiteren vorteilhaften Ausgestaltung der Erfindung zur Aufnahme und/oder zum Positionieren des Füllorgans der Dosiermittel geeignete Öffnungen aufweisen, die durch Manipulationssicherungen, vorzugsweise durch Klebeplomben, verschlossen sind.

Gemäß einer weiteren vorteilhaften Ausgestaltung der Erfindung zum Erfassen des Heizwärmeverbrauchs weist ein Gehäuse oder Halterung für Ampullen eine definierte Ausrichtung bewirkende Adaptionsmittel an einem Gehäuse- oder Halterungsabschnitt, insbesondere zwei Noppen an einem oberen oder unteren Gehäuse- oder Halterungsabschnitt auf.

Gemäß einer weiteren vorteilhaften Ausgestaltung der Erfindung zum Erfassen des Heizwärmeverbrauchs sind an Gehäuse oder Halterung Ablesewerte vorgesehen, die zur Gerätekennzeichnung ein Identifikationssignal, z. B. eine Kennzeichnung des betreffenden Heizkostenverteilers beinhalten. Die Ablesewerte sind so an Halterung oder Gehäuse angeordnet, daß deren Abbild im Ablesegerät zu einer Kontrolle der Positionierung des Ablesegeräts verwendet werden kann. Bei Feststellen eines Abweichens der normgerechten Positionierung des Ablesegeräts relativ zu Halterung oder Gehäuse kann in Abhängigkeit von dieser Abweichung von der Auswerteeinheit ein Korrekturwert bereitgestellt werden, der auf die Ablesewerte für den Verbrauch des Heizkörpers angewandt werden kann, wobei gemäß einer weiteren vorteilhaften Ausgestaltung der Erfindung zum Erfassen des Heizwärmeverbrauchs bei einer festgestellten Abweichung des Ablesegerätes von der normgerechten Positionierung ein akustisches oder optisches Signal für den Bediener des Gerätes ausgegeben werden kann, so daß dieser ggf. die Position des Gerätes korrigieren kann.
Die Gerätekennzeichnung des HKV kann in maschinenlesbarer Form, z.B. als Strichcode, vorliegen. Das Einlesen des Strichcodes in das Ablesegerät kann mit der mindestens einen oder einer zweiten CCD-Zeile erfolgen. Der Strichcode wird hierzu beispielsweise durch eine zweite im Ablesegerät vorhandenen Glühlampe beleuchtet. Die eingelesene Gerätekennzeichnung und der Anzeigenwert für die Füllstandshöhe werden gemeinsam im Ablesegerät gespeichert oder über die Schnittstelle an einen Erfassungsrechner übertragen.

Das erfindungsgemäße Gehäuse oder Halterung für Meßampullen nach dem Verdunstungsprinzip kann mit Mitteln versehen sein, die die Kontrolle des Vorjahresverbrauchs erlauben. Dies kann erfolgen durch Aufbewahren einer Kontrollampulle im HKV neben der aktuellen Meßampulle im Gehäuse, oder durch einen verschiebbaren Zeiger, der beim Ablesen auf die aktuelle Anzeige eingestellt wird.

Bei Verwendung einer zweiten Ampulle (Kontrollampulle) erfolgt dann kein Ampullentausch, sondern die Kontrollampulle wird in ähnlicher Weise, wie zuvor für die Meßampulle beschrieben, auf den gemessenen Füllstand der Meßampulle aufgefüllt. Hierzu wird zweckmäßig zunächst die Kontrollampulle auf 100 % Füllhöhe gefüllt. Anschließend wird soviel Flüssigkeit aus der Kontrollampulle abgesaugt, bis der vorherige Füllstand der aktuellen Meßampulle erreicht ist. Bei identischen Ampullenmaßen sind die in die Meßampulle nachgefüllte und die aus der Kontrollampulle abgesaugte Flüssigkeitsmenge identisch. Das Nachfüllen und Absaugen erfolgt zweckmäßigerweise parallel, z.B. durch mechanische Kopplung eines Saugkolbens mit dem Kolben der Dosierpumpe. Durch diese mechanische Kopplung ist inhärent sichergestellt, daß die Füllhöhe der Kontrollampulle derjenigen der Meßampulle vor der Nachfüllung genau entspricht. Da bei diesem Verfahren entgegen der herkömmlichen Verfahrensweise kein Ampullentausch erfolgt, hat die Flüssigkeit in der Kontrollampulle eine reine Anzeigefunktion und muß deshalb auch keine verdunstende Meßflüssigkeit sein. Zweckmäßigerweise wird hier ein Indikatorstoff, wie z. B. eine Flüssigkeit eingesetzt, die bei den zu erwartenden Temperaturen praktisch nicht verdunstet, so daß auf einen dampfdichten Verschluß der Kontrollampulle verzichtet werden kann.

Bei einer Vorjahresanzeige mit Hilfe eines beweglichen Zeigers muß eine entsprechende Mechanik vorgesehen werden, mit dem dieser Zeiger auf die Anzeige der Meßampulle gestellt werden kann. Die Einstellung des Zeigers kann durch ein geeignetes Gestänge erfolgen, das parallel zur Kanüle durch eine zweite Bohrung in das HKV-Gehäuse eingeführt und im Zeiger eingehakt wird. Zweckmäßigerweise wird der Zeiger zunächst auf die Nullmarke, entsprechend vollständiger Ampullenfüllung, gestellt. Anschließend erfolgt die Einstellung des Zeigers auf den Füllstand der Meßampulle. Die notwendige Zeigerverschiebung ist der nachzufüllenden Flüssigkeitsmenge proportional. Deshalb kann hier analog dem oben beschriebenen Verfahren durch mechanische Kopplung des Kolbenantriebs für die Dosierpumpe mit dem Gestängeantrieb für die Zeigerverschiebung, gegebenenfalls durch Zwischenschaltung eines geeigneten Getriebes, inhärent sichergestellt werden, daß die Zeigerposition dem vorherigen Füllstand der Meßampulle entspricht.

Nach Beendigung der oben beschriebenen Vorgänge wird die Füllkanüle und gegebenenfalls das Gestänge für die Zeigerverstellung wieder nach oben in Ruheposition gefahren, so daß das erfindungungsgemäße mobile System von Gehäuse oder Halterung abgenommen werden kann. Anschließend wird die Fördereinrichtung wieder in ihre Ausgangsstellung zurückgefahren und vollständig mit Meßflüssigkeit gefüllt, die über eine zweite Schlauchleitung und ein zweites Rückschlagventil bzw. Steuerventil aus dem Vorratsbehälter angesaugt wird. Die Öffnungen auf der Oberseite des HKV werden abschließend mit einem Manipulationsschutz, z. B. einer Klebeplombe, abgedeckt, wobei vorzugsweise das mobile System vor Abziehen von dem Heizkostenverteiler den Manipulationsschutz wieder herstellt.

Anhand der beigefügten Zeichnung, die ein bevorzugtes Ausführungsbeispiel der Erfindung zeigt, wird diese nun näher beschrieben.

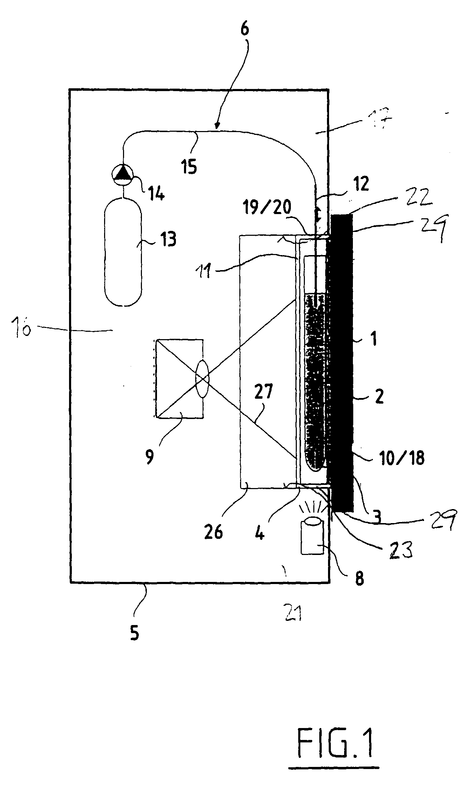

Figur 1 zeigt eine schematische Ansicht des erfindungsgemäßen Systems.

Fig. 1: An einem Heizkörper 1 ist ein Gehäuse oder eine Halterung 4 vorgesehen, die durch einen entsprechenden, hier nicht näher dargestellten Manipulationsschutz an dem Heizkörper 1 befestigt ist. Das Gehäuse oder die Halterung 4 beinhaltet eine Meßampulle 3, in der eine verdunstende Meßflüssigkeit 2 enthalten ist. Ein dem Heizkörper 1 zugewandter Rückenteil 18 von Gehäuse oder Halterung 4 ist aus wärmeleitendem Metall und eine von dem Heizkörper 1 abgewandte Vorderseite 11 ist aus Kunststoff gefertigt und gibt den Blick frei auf eine Meß- und eine eventuell vorhandene Kontrollampulle 3.

Die Ampulle 3 ist so gestaltet, daß eine Wiederbefüllung der während einer Abrechnungsperiode verdunsteten Meßflüssigkeit möglich ist. In einer bevorzugten Ausführung ist die Ampulle 3 nach oben offen.

Ein mobiles System 5 weist ein Ablesegerät 9 auf, das auf das Gehäuse bzw. die Halterung 4 für die Ampullen 3 aufsetzbar ist. Das mobile System 5 weist im wesentlichen ein Verbindungselement 16 in Form eines Handgriffs und einen oberen Schenkel 17 und einen unteren Schenkel 21 auf. Die oberen und unteren Schenkel 17, 21 sind jeweils mit vorzugsweise konkaven Anlageflächen 22, 23 versehen, die geeignet sind, sich an oberen und unteren Deckeln 29 von Gehäuse oder Halterung 4 abzustützen und beim Aufschieben und Abziehen auf die oberen und unteren Deckel 29 von Gehäuse oder Halterung 4 aufgrund ihrer konkaven Form nicht zum Klemmen neigen.

Alternativ kann einer der Schenkel 17, 21 über ein Scharnier (nicht dargestellt) gelenkig mit dem Verbindungselement 16 verbunden sein, so daß das Anpassen von vorzugsweise ebenen Anlageflächen 22, 23 eines der oberen oder unteren Schenkel des Ablesegeräts 9 an Gehäuse oder Halterung 4 durch Schließen des Winkels zwischen Verbindungselement und Schenkel erfolgen kann. Gemäß einer alternativen Ausgestaltung der Erfindung kann aber auch eine vorzugsweise ebene Anlagefläche 22, 23 einer der oberen oder unteren Schenkel z. B. durch Druckmittel verstellt werden, so daß eine kraftschlüssige Anlage der Anlageflächen 22, 23 an den Deckeln 29 von Gehäuse oder Halterung 4 erfolgt, wobei die der verstellbaren Anlagefläche gegenüberliegende Anlagefläche vorzugsweise starr wäre, um als Bezugsfläche für eine definierte Positionierung des Ablesegeräts 9 dienen zu können.

Weiter sind Adaptionsmittel 21 an Gehäuse oder Halterung 4 vorgesehen, die eine definierte Positionierung von mobilem System 5 zu Gehäuse bzw. Halterung 4 sicherstellen. Paarweise Noppen (nicht dargestellt) an den oberen und unteren Deckeln 29 von Gehäuse oder Halterung 4 oder Öffnungen 32 am oberen Deckel 29 von Gehäuse oder Halterung 4 für Dosiermittel 6 sind so ausgebildet, daß diese mit den Anlageflächen der gegenüberliegenden Schenkel zusammenwirken, um eine korrekte Ausrichtung des mobilen Systems 5 auf Gehäuse oder Halterung 4 zu erzielen.

Das Ablesegerät 9 des mobilen Systems 5 weist Erfassung- und Auswerteeinheiten 7 (nicht dargestellt) sowie Dosiermittel 6 zum Ausgleich der verdunsteten Meßflüssigkeit 2 auf. Die Erfassungs- und Auswerteeinheiten 7 weisen insbesondere eine Beleuchtungseinrichtung 8 und einen Temperatursensor 10 auf. Die Dosiermittel 6 des Ablesegerätes 5 bestehen aus einem vorzugsweise extern im Schenkel 17 angeordneten Füllorgan 12 nebst einem vorzugsweise extern angeordneten Vorratsbehälter 13 für die nachzufüllende Meßflüssigkeit 2 sowie einer Pumpe 14 mit zugeordneten Leitungen 15 und Ventilen 16, wobei ein Ventil 16 zwischen Vorratsbehälter 13 und Pumpe 14 und ein Ventil zwischen Pumpe 14 und Füllorgan 12 angeordnet ist.
Bevorzugterweise ist das Füllorgan 12 als eine bewegliche Füllkanüle ausgebildet.

Das Füllorgan 12 kann durch Öffnungen 19 im oberen Deckel in das Gehäuse 4 bzw. in die Ampulle 3 eingeführt werden. Die Öffnungen 19 in dem oberen Abschnitt von Gehäuse oder Halterung 4 sind durch einen Manipulationsschutz, z. B. eine Klebeplombe 20 verschlossen.

Ein Temperatursensor 10 des Ablesegeräts 5 wird von einem Elektromagnet 22 gegen Gehäuse oder Halterung 4 für die Ampullen 3 der Meßflüssigkeit 2 gedrückt. Alternativ kann die Erfassung der Temperatur an Gehäuse oder Halterung 4 durch den Temperatursensor 10 berührungslos erfolgen, indem z. B. im Ablesegerät 9 eine Auswertung der Wärmestrahlung des Heizkörpers 1 erfolgt oder die Dichte oder Wichte der Meßflüssigkeit in der Ampulle 3 erfaßt wird, oder indem z. B. der von der Dichte der Meßflüssigkeit abhängige Brechungsindex entsprechend in der Auswerteeinheit ausgewertet wird.

Nachdem das Ablesegerät 9 mit dem Gehäuse bzw. dem Halter 4 für die Ampulle 3 adaptiert ist, erfolgt der Meß- und danach mittels der Dosiermittel der Nachfüllprozeß. Der vor der Ampulle 3 befindlichen Freiraum 26 des Ablesegerätes 5 verhindert eine doppelte Anlage des mobilen Systems 5 am Gehäuse oder Träger 4 und somit Überbestimmungen der geometrischen Beziehungen zwischen Ablesegerät 5 und mobilem System 5.

### Bezugszeichenliste

- 1: Heizquelle
- 2: Meßflüssigkeit
- 3: Ampulle für 2
- 4: Gehäuse/Halterung für 3
- 5: Ablese- und Abfüllgerät
- 6: Dosiermittel
- 7: Erfassungs- und Auswerteeinheiten
- 8: Beleuchtungseinrichtung
- 9: Ableseoptik
- 10: Temperatursensor
- 11: Kommunikationsschnittstelle
- 12: Füllorgan
- 13: Vorratsbehälter
- 14: Pumpe
- 15: Leitung
- 16: Ventil
- 17: Einstellvorrichtung für Vorjahresanzeige
- 18: Wärmeleitendes Rückenteil
- 19: Öffnung für Dosierung
- 20: Klebeplombe
- 21: Adaptionsmittel
- 22: Elektromagnet
- 23: Separate Beleuchtungseinheit
- 24: Absenkmechanik
- 25: Grobdosierungseinheit
- 26: Freiraum in 5
- 27: Lichtkegel

## Patentansprüche

1. Mobiles System (5) zum Erfassen eines Heizwärmeverbrauchs von Heizkörpern gemäß dem Prinzip der Verdunstung mit
einem Ablesegerät zur Erfassung differierender Pegelstände verdunstender Meßflüssigkeit in mindestens einer Ampulle (3), wobei die Ampulle (3) mit der Meßflüssigkeit (2) mittels einem Gehäuse oder einer Halterung (4) an Heizkörpern (1) befestigt ist,
einem Temperatursensor (10) zur Bestimmung der Temperatur an der Ampulle während des Ablesens, und
einem an das Gehäuse oder die Halterung (4) der Ampullen (3) adaptierbaren Rahmen des mobilen Ablesegeräts (5),
**dadurch gekennzeichnet, daß**
das mobile Ablesegerät (5) zum Ausgleich von in der Ampulle (3) verdunsteter Meßflüssigkeit (2) intern oder teilweise extern mit Dosiermitteln(6) versehen ist.

2. Mobiles System (5) zum Erfassen des Heizwärmeverbrauchs nach Anspruch 1, dadurch gekennzeichnet, daß eine auf die Ampulle (3) für die Meßflüssigkeit (2) gerichtete Beleuchtungseinrichtung (8) vorgesehen ist, die mit den Dosiermitteln (6) zusammenwirkt.

3. Mobiles System (5) zum Erfassen des Heizwärmeverbrauchs nach Anspruch 1 und 2, dadurch gekennzeichnet, daß im Ablesegerät (5) eine feststehende Ableseoptik (9) mit optischem Sensor angeordnet ist.

4. Mobiles System (5) zum Erfassen des Heizwärmeverbrauchs nach Anspruch 3, dadurch gekennzeichnet, daß die Ableseoptik (9) mindestens eine CCD Zeile (couple charge device-Zeile) aufweist.

5. Mobiles System (5) zum Erfassen des Heizwärmeverbrauchs nach Anspruch 1, dadurch gekennzeichnet, daß eine Steuerungs- und Auswerteelektronik (7) des Ablesegeräts (7) vorgesehen ist.

6. Mobiles System (5) zum Erfassen des Heizwärmeverbrauchs nach Anspruch 1, dadurch gekennzeichnet, daß am/im Ablesegerät (5) eine Kommunikationsschnittstelle (11) angeordnet ist.

7. Mobiles System (5) zum Erfassen des Heizwärmeverbrauchs nach Anspruch 1, dadurch gekennzeichnet, daß die Dosiermittel (6) ein an die Ampulle (3) für die Meßflüssigkeit (2) anschließbares Füllorgan (12) mit zugeordneten Leitungen (15) und Ventilen (16) aufweisen nebst extern angeordnetem Vorratsbehälter (13) für nachzufüllende Meßflüssigkeit (2) sowie einer externen Pumpe (14).

8. Mobiles System (5) zum Erfassen des Heizwärmeverbrauchs nach Anspruch 7, dadurch gekennzeichnet, daß das Füllorgan (12) als bewegliche Füllkanüle ausgebildet ist.

9. Mobiles System (5) zum Erfassen des Heizwärmeverbrauchs nach Anspruch 1, dadurch gekennzeichnet, daß das Füllorgan (12) der Dosiermittel (6) über eine motorisch angetriebene Absenkmechanik (24) der Ampulle (3) für die Meßflüssigkeit (2) zugeführt wird.

10. Mobiles System (5) zum Erfassen des Heizwärmeverbrauchs nach Anspruch 1, dadurch gekennzeichnet, daß Meßflüssigkeit (2) mittels einer Fördereinrichtung, wie z. B. einer motorisch betriebenen Kolben- oder Kreiselpumpe (14) über eine Schlauchleitung (15) und ein Steuer- und Rückschlagventil (16) der Ampulle (3) zugeführt wird.

11. Mobiles System (5) zum Erfassen des Heizwärmeverbrauchs nach Anspruch 1, dadurch gekennzeichnet, daß die Dosiermittel (6) eine Grobdosierungseinheit (25) aufweisen, welche über eine Zeitsteuerung oder eine Weglängenregelung die Meßflüssigkeit (2) vordosieren.

12. Mobiles System (5) zum Erfassen des Heizwärmeverbrauchs nach Anspruch 1, dadurch gekennzeichnet, daß im Ablesegerät (5) eine Einstellvorrichtung (17) für eine Vorjahresanzeige angeordnet ist.

13. Mobiles System (5) zum Erfassen des Heizwärmeverbrauchs nach Anspruch 1, dadurch gekennzeichnet, daß der Temperatursensor (10) elektromagnetisch an Gehäuse oder Halterung (4) der Ampulle (3) zur Anlage gebracht wird.

14. Mobiles System (5) zum Erfassen des Heizwärmeverbrauchs nach Anspruch 1, dadurch gekennzeichnet, daß der Temperatursensor (10) die Temperatur an der Ampulle berührungslos erfaßt, z. B. mittels Strahlungsmessung oder der Erfassung von Parametern der Meßflüssigkeit, wie Dichte, Wichte oder Brechungsindizes über z. B. die von der Beleuchtungseinrichtung reflektierte Strahlung.

15. Mobiles System (5) zum Erfassen des Heizwärmeverbrauchs nach Anspruch 1, dadurch gekennzeichnet, daß die Sollfüllstandshöhe in der Ampulle mittels der Ableseeinrichtung geregelt wird.

16. Mobiles System (5) zum Erfassen des Heizwärmeverbrauchs nach Anspruch 1, dadurch gekennzeichnet, daß das Ablesegerät (5) einen gegenüber dem Gehäuse- oder dem Halter (4) für die Ampulle (3) positionierbaren Freiraum (26) aufweist.

17. Gehäuse oder Halterung (4) für Ampullen (3) mit verdunstender Meßflüssigkeit (2) zum Erfassen des Heizwärmeverbrauchs,
**dadurch gekennzeichnet, daß**
die Ampullen (3) der Meßflüssigkeit (2) zur Aufnahme und/oder zum Positionieren des Füllorgans (12) der Dosiermittel (6) geeignete Öffnungen (19) aufweisen, die durch Klebeplomben (20) verschlossen sind.

18. Gehäuse oder Halterung (4) für Ampullen (3) gemäß Anspruch 16, dadurch gekennzeichnet, daß eine definierte Ausrichtung des Ablesegeräts bewirkende Adaptionsmittel (21) an einem Gehäuse- oder Halterungsabschnitt, insbesondere zwei Noppen an einem oberen oder unteren Deckel von Gehäuse- oder Halterung, vorgesehen sind.

19. Gehäuse oder Halterung (4) für Ampullen (3) gemäß Anspruch 16, dadurch gekennzeichnet, daß Ablesewerte vorgesehen sind, die zur Gerätekennzeichnung ein Identifikationssignal beinhalten.
